Europäisches Patentamt

European Patent Office

Office européen des brevets

(11) Publication number: **0 230 351 B1**

## EUROPEAN PATENT SPECIFICATION

(45) Date of publication of patent specification: **22.07.92**   (51) Int. Cl.⁵: **G06F 1/26**, G06F 9/46

(21) Application number: **87300121.8**

(22) Date of filing: **08.01.87**

(54) Information processing system.

(30) Priority: **17.01.86 US 820459**

(43) Date of publication of application:
**29.07.87 Bulletin 87/31**

(45) Publication of the grant of the patent:
**22.07.92 Bulletin 92/30**

(84) Designated Contracting States:
**DE FR GB IT**

(56) References cited:
**US-A- 4 327 410**
**US-A- 4 458 307**

**PATENT ABSTRACTS OF JAPAN, vol. 9, no. 37 (P-335)[1760], 16th February 1985; & JP-A-59 178 694 (HITACHI SEISAKUSHO K.K.) 09-10-1984**

**PATENT ABSTRACTS OF JAPAN, vol. 8. no. 208 (P-302)[1645], 21st September 1984; & JP-A-59 90 295 (NIPPON DENKI K.K.) 24-05-1984**

(73) Proprietor: **International Business Machines Corporation**
**Old Orchard Road**
**Armonk, N.Y. 10504(US)**

(72) Inventor: **Arroyo, Ronald Xavier**
**Route 4 Box 167**
**Elgin Texas 78621(US)**
Inventor: **Day, Michael Norman**
**2005 Abbey Circle**
**Austin Texas 78727(US)**
Inventor: **Edrington, Jimmie Darius**
**4002 Val Verde**
**Georgetown Texas 78628(US)**
Inventor: **Hanna, James Thomas**
**48 Summit View**
**Austin Texas 78703(US)**
Inventor: **Hunt, Gary Thomas**
**11506 Windermere Meadows**
**Austin Texas 78759(US)**
Inventor: **Pancoast, Steven Taylor**
**12003 Carmel Park**
**Austin Texas 78727(US)**

(74) Representative: **Killgren, Neil Arthur**
**IBM United Kingdom Limited Intellectual Property Department Hursley Park**
**Winchester Hampshire SO21 2JN(GB)**

## Description

This invention relates to the powering on and off of a computer system, and more particularly to the capability to suspend and resume a software application running on the computer system during a power off/on cycle.

In the information processing environment, it would be very valuable to be able to suspend and resume programs running on a central processing unit (CPU) during times when the CPU is powered off and on. It would be especially valuable to be able to resume the programs at the exact execution point at which they were suspended during a power off occurrence. The ability to suspend and resume an application program during a power off/power on cycle is very important for a portable computer. A typical user of such a portable computer would most likely be cycling his computer off and on much more frequently than a user of a computer that is fixed in one location. It would be very desirable and highly productive for the user of such a portable computer to be able to instantly power on and resume system operation at the point at which execution was suspended.

A further advantage of such a suspend and resume feature is found in the battery operated computer field. By eliminating the restarting of a program from the beginning, battery life would be extended by eliminating the disk drive operations usually required for an application and a data base which have to be reloaded at power on.

A major requirement for such a suspend and resume feature is that the state of the CPU and the computer registers and peripherals must be interrogated and stored at the suspend time so that they may be restored accurately at the time of resumption. Consequently in effect the entire system's state must be saved including control and memory mechanisms associated with the display, system timing mechanisms, interrupt and keyboard controllers, as well as communication controllers. A second major requirement to be able to perform an accurate suspend/resume function is that the contents of the memory must be retained. As part of this latter requirement, some power must be supplied to the memory while the system is off in order to save its contents. As part of this saving requirement, it would be desirable for the system's state to be saved in a special area separate from main memory that is not accessible to any application programs running on the system. In this manner, main memory space is not used up during a suspend/resume operation.

Large computing systems have been known to have some type of early-power-off warning system to enable the computing system to go down without destroying large quantities of data. However, none of these systems has the capability to restore the hardware to its pre-power down state. Typically, what is done is that the system is restarted and reloaded from the beginning. U. S. Patent 4,458,307 discloses a data processing system having a volatile main memory which includes a data save controller for protection against loss of the memory during a power failure. At the first sign of a power supply failure, non-postponable tasks are completed and data saving is accomplished by storing the contents of volatile processor registers in the main memory area. At the conclusion of a power failure, the contents of the main memory are then transferred back to the volatile registers for reinitialization and restart. Power fault detection circuitry is required to detect a power failure sufficiently in advance to be able to transfer from volatile to non-volatile storage areas.

A similar technique is found in U. S. Patent 3,959,778 wherein data is transferred from a volatile main memory of a data processor to a peripheral permanent storage unit upon failure of the main supply to the data processor. Circuitry is provided to read the contents of the main memory into the selected permanent storage unit within a time period short enough so that perishable data in the main memory is not lost.

U.S Patent 4,096,560 describes a protection circuit which disables control signals to a microprocessor and to a memory to prevent the loss of stored data from the memory during power fluctuations. The control signals inhibit the reading or writing of data into the memory and maintain the microprocessor in a reset mode of operation during the power level fluctuations and interruptions.

U.S. Patent 4,327,410 shows a similar arrangement to that of U.S. Patent 3,959,778, applied to a transaction processing system. Transaction totals and other data in process are preserved in a non-volatile store on occurrence of a power failure to permit resumption of an aborted transaction on restoration of the power.

However none of these prior systems provides a convenient solution to the requirement for suspension and resumption at the instigation of the operator of a portable computer as discussed above.

According to the invention we provide an information processing system comprising a central processor, a memory for instructions and data, and a plurality of input/output devices, said system being characterised by testing means responsive to initiation of a powering-off sequence in said system to access system profile data stored in said memory to determine whether a resume mode is set, activating means coupled to said testing means for activating a save area of said memory to save the state of all memory locations, the state of all input output devices and interrupt, register and display data in response to said resume mode being set and flag means operable in response to completion of storage of said states and data to set a suspend flag suspending further execution of an application program running on said system.

We further provide a method of controlling an information processing system having a central processor, a memory and a plurality of input/output devices, the method being characterised by accessing system profile data in response to the initiation of a powering - off sequence to determine whether a resume mode is set, saving, in response to said resume mode being set, the state of all memory locations and said input/output devices and interrupt, register and display data in said memory, and setting a system flag in response to completion of said saving step to suspend further execution of an application program on said system.

By electing operation in resume mode, the user of such a system may arbitrarily suspend execution at any point in time and similarly resume execution at any point in time without having to restart and reload the program that was running on the system at the time it was powered down a facility which is extremely useful in battery operated computers.

In a preferred embodiment of the invention the computer system state is saved in a special save area that is not accessible to any application program running on the system. As a result of this, all of the main memory area is available to application programs independently of the system save requirements demanded by the special system save area.

As an additional capability, the computer system may be powered on and off under software control. Attendant with the capability to power on and off under software control is the capability to allow unattended operation of the computer system. A time of day alarm function built into the system enables the system to be powered on, and resumed at predetermined times.

In order that the invention may be fully understood a preferred embodiment thereof will now be described with reference to the accompanying drawings in which:

Fig. 1 is a functional block diagram of the system according to the present invention.

Fig. 2 is a block diagram of the power control section used to power down and power up the system according to the present invention.

Figs. 3a-3c are flow charts depicting the operations which occur during a power down operation.

Figs. 4a-4e are flow charts depicting the powering back on of the system following a power off sequence.

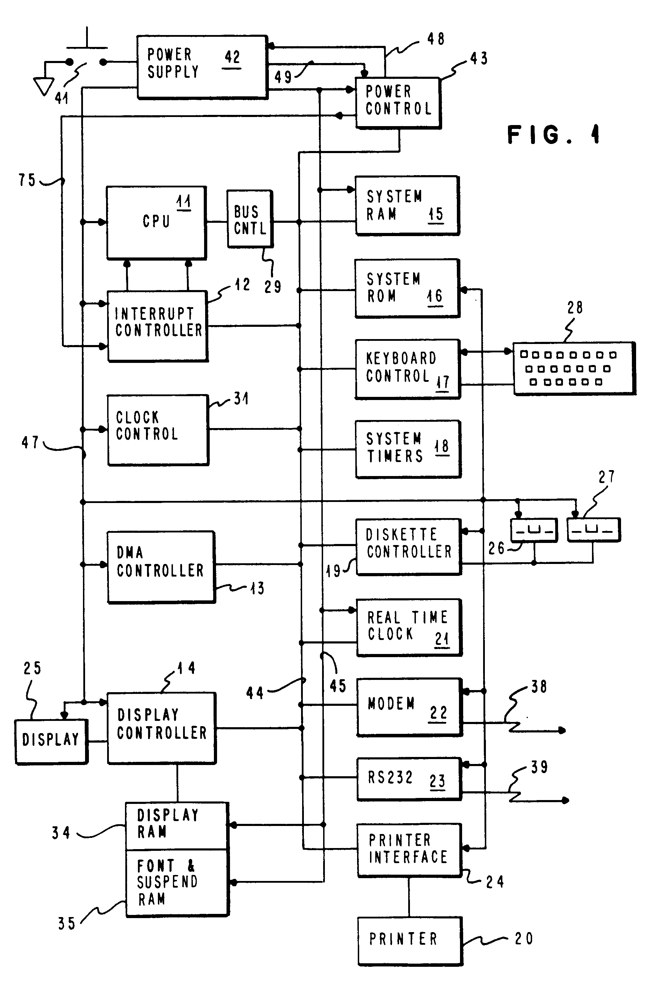

Referring now more particularly to the drawings, the overall system of the invention is shown in Fig. 1. Continuous power is supplied from power supply 42 to power control 43 over line 45. As can be seen, continuous power is also supplied from power supply 42 on line 45 to system RAM 15, real time clock 21, display RAM 34 and display font/suspend RAM 35. The operation of on/off switch 41 to power supply 42 controls the operation of line 49 which communicates between power supply 42 and power control 43. When on/off switch 41 is depressed, line 49 causes power control 43 to provide a power enable signal over line 48 to power supply 42. In this manner, switched power is provided over line 47 to CPU 11, interrupt controller 12, clock control 31, DMA controller 13, display controller 14 and display 25. Power control 43 also provides a suspend non-maskable interrupt (NMI) to interrupt controller 12. Note that switched power is also provided on line 47 to system ROM 16, keyboard control 17 and keyboard 28, diskette controller 19, diskette drives 26 and 27, modem 22, RS232 communication interface 23 and printer interface 24.

Modem 22 communicates with an external device over line 38 and the RS232 interface 23 communicates with an external device over line 39. Bus controller 29 controls the flow of data among the following devices: power control 43, CPU 11, interrupt controller 12, clock control 31, DMA controller 13, display controller 14, printer interface 24, RS232 communication interface 23, modem 22, real time clock 21, diskette controller 19, system timers 18, keyboard control 17, system ROM 16 and system RAM 15. As can be seen, the communication of data among these aforementioned devices transpires over bus 44. Note also there is data communication between display controller 14 and display 25, between diskette controller 19 and diskette drives 26 and 27, and between keyboard control 17 and keyboard 28.

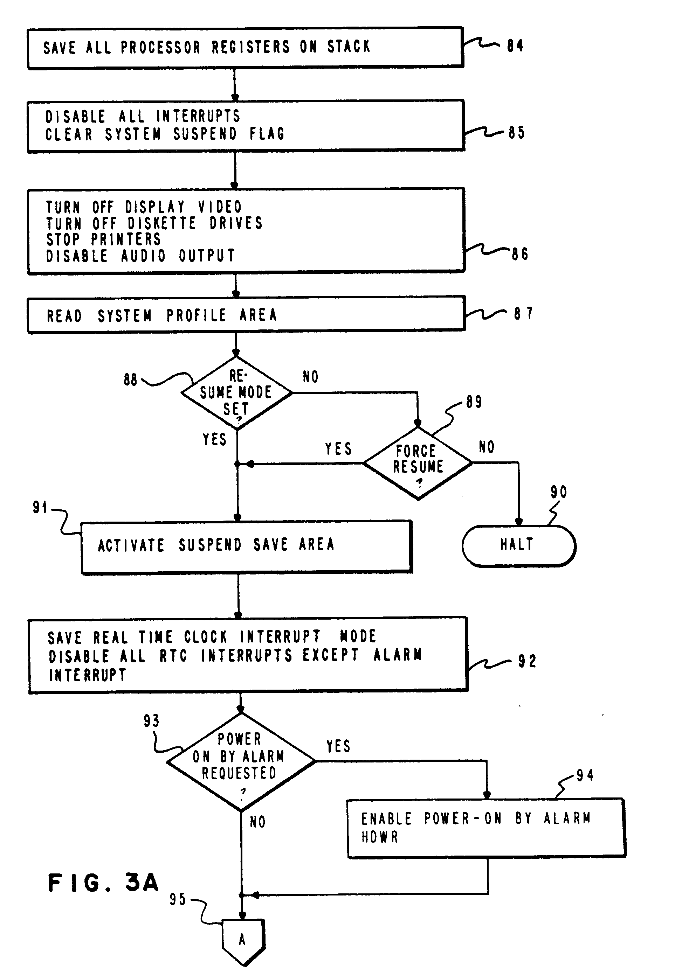

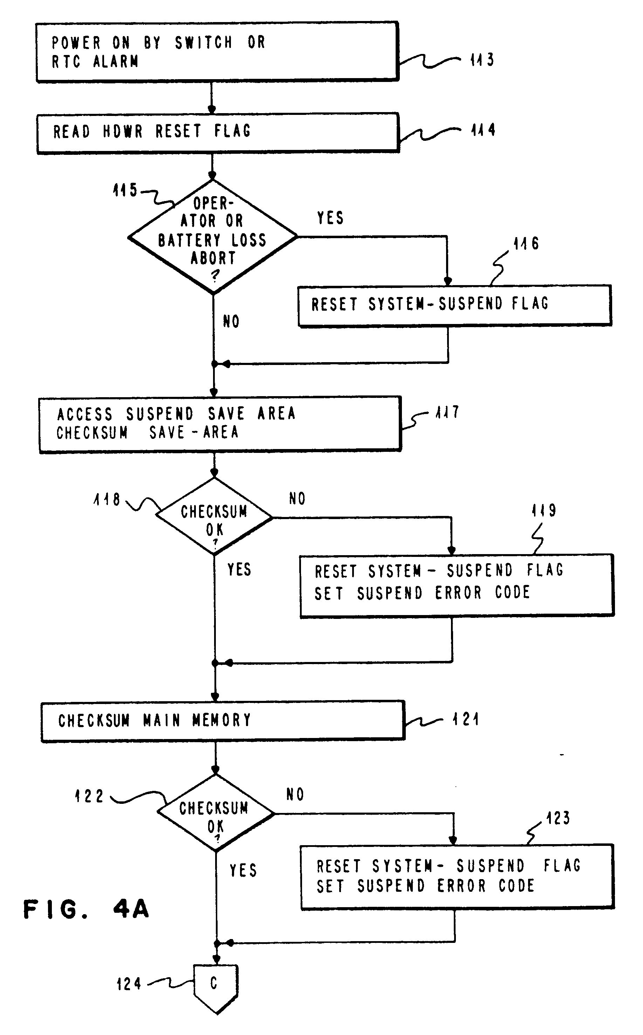

The suspend and resume operations during a power on/off cycle will now be described in more detail with respect to Figs. 3a-3c and 4a-4e, respectively. In operation, when power on/off switch 41 is depressed, a suspend NMI is generated to initiate the saving of the system's present state within approximately a two second time period. As shown in step 84, the first operation performed subsequent to power switch 41 being depressed is to save the contents of all of the registers of CPU 11. Subsequently, all system interrupts are disabled and a system suspend flag is cleared as depicted in step 85. The clearing of the system suspend flag prevents the system from being restarted from the beginning when the system is resumed unless the system is successfully suspended. As indicated in step 86, the diskette drives and the display are turned off and any printer operation is stopped while any audio output is disabled.

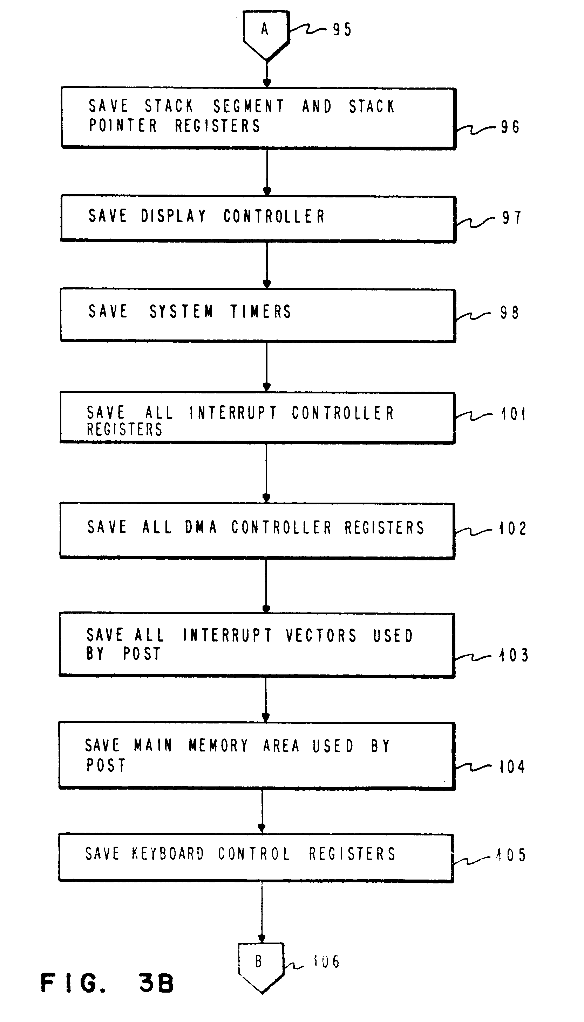

In step 87, a system profile area in RAM 15 is read. In this area, a user of the system can indicate that it is desired to have the system restart from the beginning of any suspended application program rather than having it resume at its suspended execution point. In decision block 88, a determination is made as to whether or not a resume mode is set, i.e., whether or not the system will resume at the suspended execution point. If the answer is no, then a second determination is made as to whether or not a "force" resume is set. This is done in block 89. A "force" resume overrides the information in the system profile area that was read in step 87 so as to force the system to resume at its suspended execution point. This "force" resume would be used to prevent loss of the system's state if the power supplied to the system were in danger of running out. In the preferred embodiment disclosed herein, the power is supplied to the system by a battery, i.e., power supply 42 is a battery. In this manner, the state of the system can be saved if the battery runs low during the execution of an application program without losing data which cannot be recovered. If the answer to decision block 89 is no, then no saving of the system is done in the event of power off. However, if the answer to either decision block 88 or decision block 89 is yes, then as indicated in step 91, a special save area in RAM 35 is activated. In accordance with the activation of this special suspend save area in RAM 35, the real time clock 21 interrupt mode is saved and all real time clock interrupts except an alarm interrupt are disabled, i.e., only the alarm function of the system has power remaining on. In decision block 93, a determination is made as to whether or not an alarm power-on-activation has been requested. If there are no alarms set, then operation proceeds to step 95 which will be explained with respect to Fig. 3b. However, if an alarm power-on has been requested, then as indicated in step 94, the alarm hardware provides an enable-power-on so that at the time an alarm goes off, if the system has been suspended it will then resume execution at the point at which it was suspended.

Having made a determination as to whether or not a resume mode has been set and a second determination as to whether or not an alarm function is required, a number of functions are carried out subsequent to step 95. These are as shown in Fig. 3b. As indicated in step 96, the stack segment and stack pointer registers within CPU 11 are saved. As indicated in steps 97 and 98, the state of the display controller 14 and the state of system timers 18 is each saved. As shown in steps 101 and 102, the registers of both interrupt controller 12 and DMA controller 13 are saved. Additionally, (as shown in step 103) all interrupt vectors which are used by the system to perform a power on self test (POST) when the system is restarted are saved. To facilitate the POST, the main area in RAM 15 used by POST is saved as disclosed in step 104. Finally, as shown in step 105, the state of the registers of keyboard control 17 is saved.

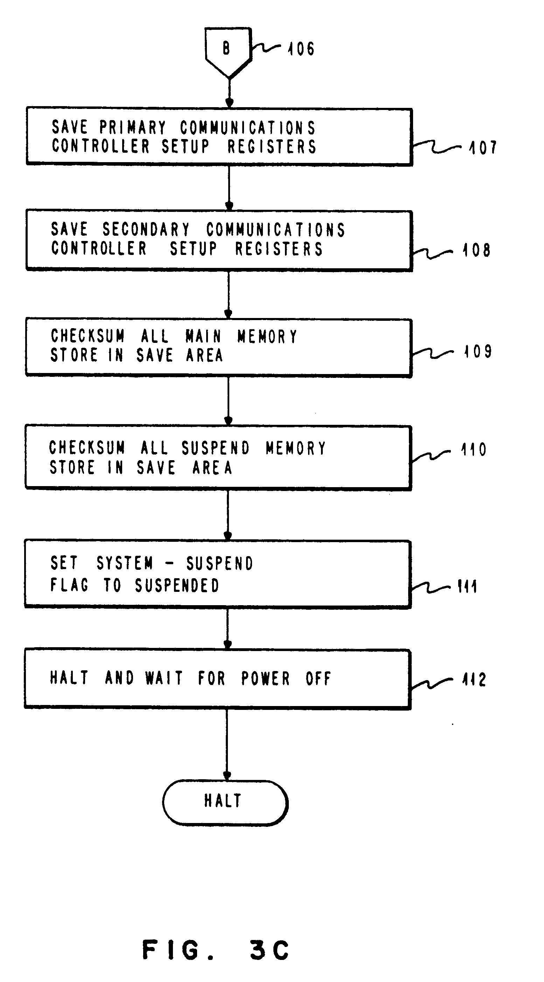

The saving of the system's state continues as shown in step 106 in Fig. 3c. Each of modem 22 and RS232 communication interface contains controller setup registers for holding information which is desired to be communicated over lines 38 and 39, respectively. Modem 22 is considered the primary communication device while RS232 communication inter- face 23 is considered the secondary communication device. As shown in steps 107 and 108, the registers containing information which is to be communicated is saved at the time of power down or system suspend. Note that any information that is being communicated over lines 38 and 39 at the time of a power down will be lost. Additionally, as shown in steps 109 and 110, both the main memory and the special suspend memory have a check sum procedure performed on them and their contents are stored in the special save area. These operations are done to make sure that the contents of memory have not changed during the suspend operation. Finally, in steps 111 and 112, a system suspend flag is set, further execution is halted and the system waits for the expiration of the two second time period after the suspend operation has been initiated. Further operation then halts until a system resume operation is initiated.

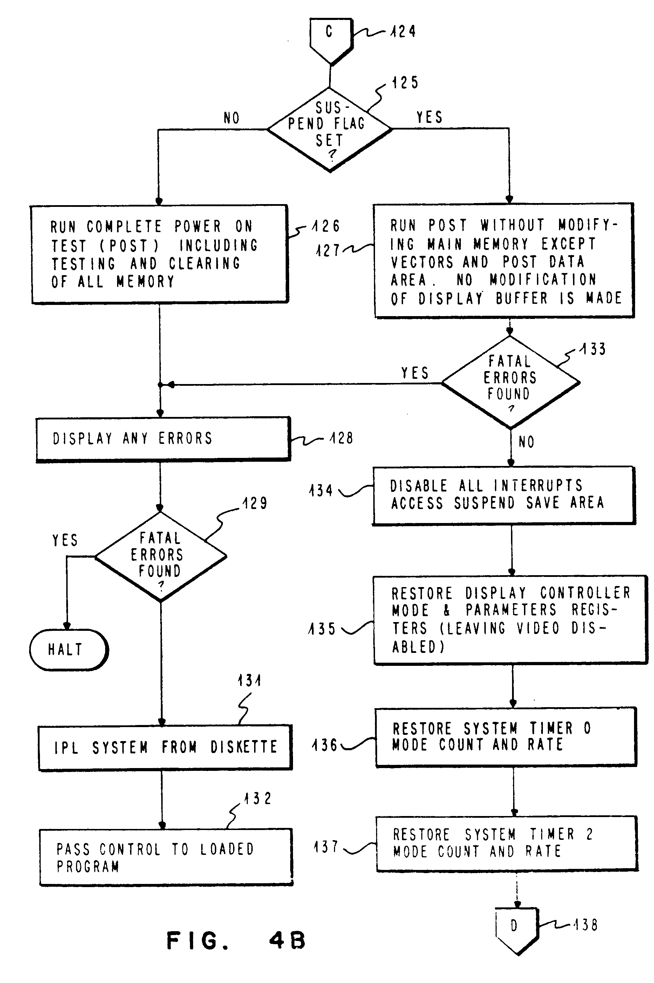

Figs. 4a-4e depict the operations and functions performed during a power on resume operation. Once again, it is to be noted that a successful power on resume operation enables the application program that was running on the computer system to begin executing at the exact point at which execution ceased at the time the power down suspend operation was performed. As indicated in step 113, power is restored to the system either by an operator pressing on/off switch 41 or by a preset alarm. In step 114, a hardware reset flag is read in order to determine whether or not the user wishes to run a new application program, thereby aborting the resumption of the system's state at power down. If no reset flag has been set, then the resumption process will proceed at the last execution point. In decision block 115, a determination is made as to whether or not there has been either an operator or battery loss abort, thereby indicating the reloading of the application program at its beginning. If either of these conditions occur, then a system suspend flag is reset as shown in step 116. However, if neither of these conditions occur, then the suspend save area in RAM 35 is accessed and a checksum function is performed. If the checksum function indicates an error, then the system suspend flag is reset and the application restarts at the beginning and not at the previous execution point. However, if the checksum of the suspend save area is successful, then a checksum function is performed on the main memory of RAM 15 as indicated in step 121. Once again, if there is an error found, then the system suspend flag is reset, an error code is issued, and the application program must restart at the beginning. However, if the latter checksum operation is successful, then a determination is made in decision block 125 (see Fig. 4b) as to whether or not a suspend flag has been set. If a suspend flag has not been set, then the state of the system must be re-stored to its beginning.

As indicated in step 126, a complete POST function is performed and all memory is cleared. Subsequently, any errors which have occurred are displayed as shown in step 128 and a determination is made as to whether or not any fatal errors have been found. If any fatal errors have been found, then the system is shut down. However, if no fatal errors have been found, then an initial program load is done on the system from one of diskette drives 26 or 27 and control is then passed to the particular application program which has been loaded into the system.

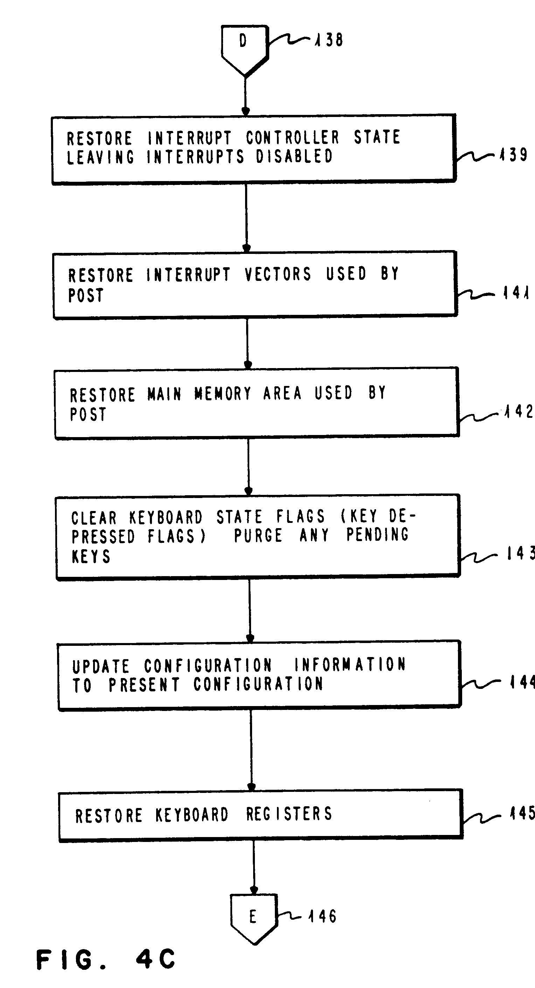

The yes branch of step 125 follows if the application program that was suspended is to be resumed at its previous execution point. In step 127, a power on self test (POST) is performed without significantly modifying the main memory of RAM 15 and without modifying font/suspend RAM 35 and display RAM 34. However, if any fatal errors have been found as shown in decision block 33, then the errors are displayed and the system is shut down. When no fatal errors have been found, then resumption proceeds with all interrupts being disabled and the suspend save area in RAM 35 being accessed. Additionally, the registers of display controller 14, and system timers 18, are restored to their previous states as shown in steps 135 through 137. The resumption process continues with step 139 as shown in Fig. 4c. At this point, interrupt controller 12 is re-stored and the main memory area of RAM 15 which was used by POST is also restored. Additionally, any key depressed flags of keyboard 20 are cleared and any pending keys in keyboard 28 are purged, while the system configuration information is updated due to possible changes while powered off. Finally, the registers of keyboard control 17 are restored.

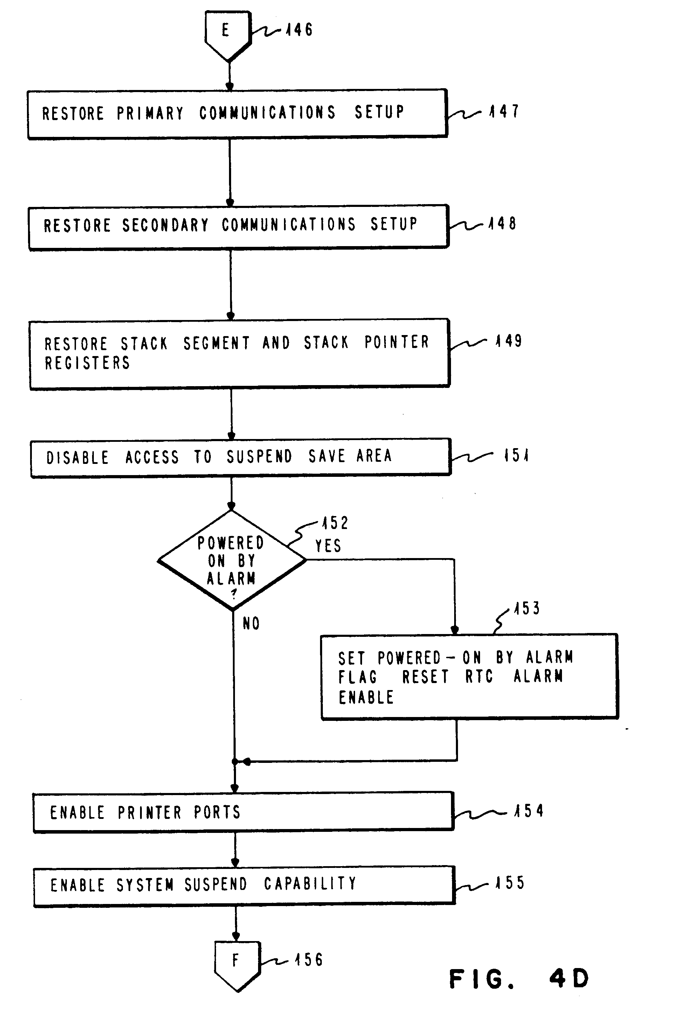

Continuing, the communication setups of modem 22 and RS232 communication interface 23 are restored as shown in steps 147 and 148 (see Fig. 4d). Next, the stack segment and stack pointer registers of CPU 11 are restored and the suspend save area in RAM 35 is disabled so that at this point application program access to this space is prohibited.

In decision block 152, a determination is made as to whether or not the system has been powered back on by an alarm that has been previously set. If the answer is affirmative, then the alarm of real time clock 21 is reset and a memory flag set, thereby informing the application program that is currently loaded that the system is currently unattended by a user. Continuing, the printer 20 is enabled. Finally, in step 155, the capability of the system to once again suspend an application program is enabled.

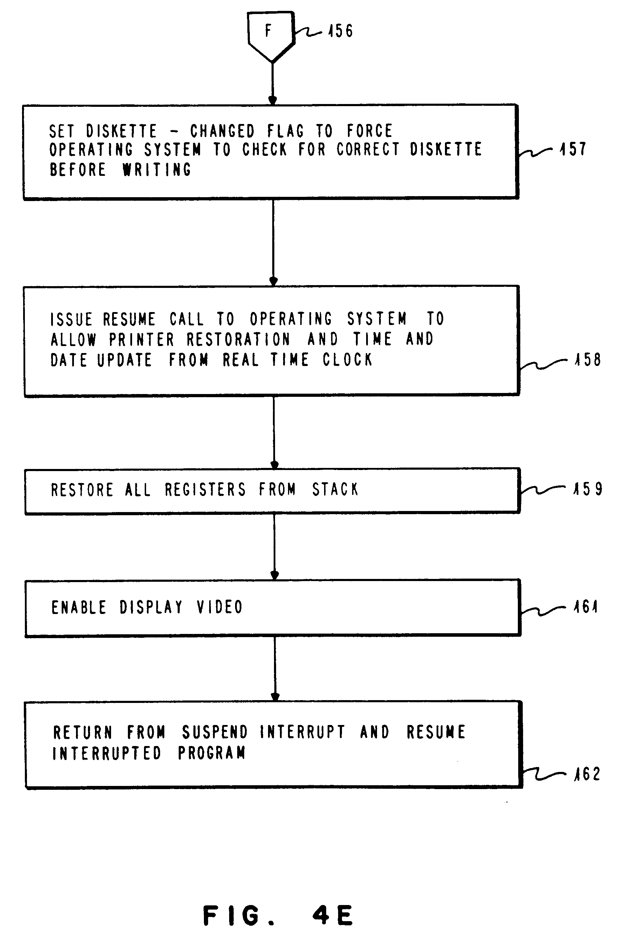

The last operations which are performed to complete the resume operation are detailed in Fig. 4e. In step 157, a change flag on both diskettes 26 and 27 is set to force the operating system program to check that the correct diskette is loaded in one of diskette drives 26 or 27 before a write operation proceeds. This is to assure that the diskette that will be written on is the same one that was being written on at the time the suspend operation was initiated. The state of diskette controller 19 could be saved and restored, however, in the best mode of this invention, it is not because the operation will be aborted with "possible diskette changed" status and it is up to the operating system to validate the diskette and retry the operation. Subsequently, a resume call is issued to the operating system program thereby allowing restoration of printer 20 to its previous state and enabling an updating of the present time and date from real time clock 21. By so doing, the correct time and date may be shown on display 25. All registers in CPU 11 are restored from the stack and a signal is provided to display controller 14 to enable video data to be shown on display 25. Finally, a return from the suspend interrupt is executed and the application program that was suspended is resumed at its previous execution point.

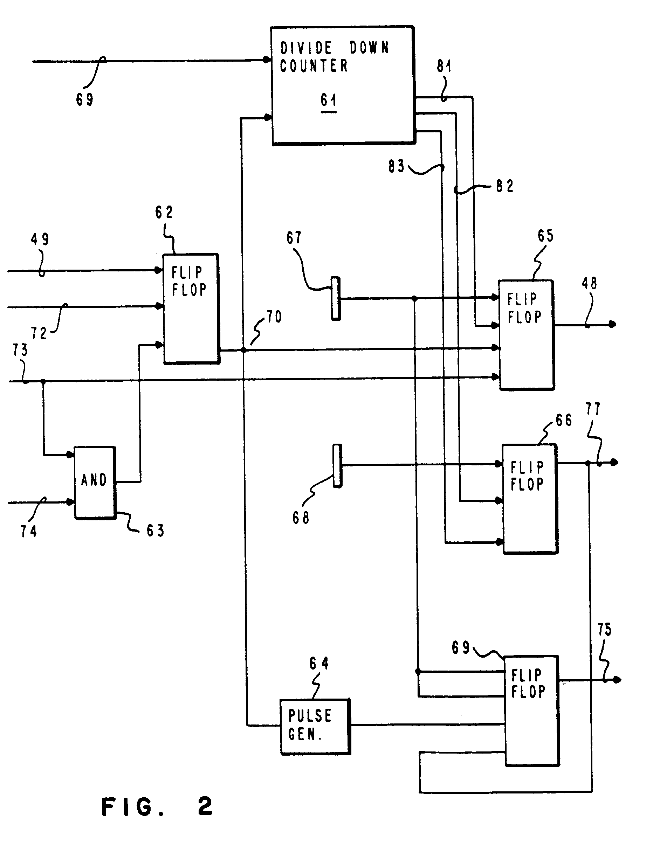

The operation of the logic used to control the powering down of the system during a system suspend operation will be explained in more detail hereinafter with respect to Fig. 2. When the power control circuit of Fig. 2 is first powered on, flip-flops 62, 65, 66 and 69 are all reset using the system reset signal on line 73. The power enable signal on line 48 is at a low logic state thereby indicating that the rest of the system is not powered on. In order to activate the power enable signal on line 48 to turn on the system, power switch 41 is depressed which in turn places a pulse on the power switch signal of line 49. Alternatively, the system may be turned on by a real time clock alarm signal on line 72 going to a low logic state thereby signaling the turning on of power by the alarm function. Flip-flop 62, which is a toggle-type flip-flop, will then change states causing the signal on line 70 to go from a high logic state to a low logic state. Since the set input for flip-flop 65 is on line 70, flip-flop 65 is then set and the power enable signal on line 48 becomes active.

When the system is powered on, a reset signal is generated by the circuit of Fig. 2 in the following manner. When the signal on line 70 transits from a high to a low logic state, a 250 millisecond count is begun. After 100 milliseconds have elapsed, the signal on line 82 is raised to a high logic state thereby causing flip-flop 66 to clock in a high signal for the reset signal of flip-flop 66. After the 250 millisecond time period has elapsed, the signal on line 83 goes to a low state which resets flip-flop 66 thereby causing the reset signal of flip-flop 66 to go to a low state. Consequently, 100 milliseconds after the power enable signal becomes active, the reset signal will become active for a period of 150 milliseconds.

To turn off the computer system, power switch 41 is again depressed, and another pulse is placed on the power switch signal on line 49. Note that the system may also be powered off by a software request, thereby causing the software power-off signal on line 74 to go to a low state thereby providing a reset signal to flip-flop 62. Flip-flop 62 then changes state thereby causing the signal on line 70 to transit from a low to a high state. As a result, flip-flop 65 which has the signal on line 70 as its set input, is not then being set and can therefore be clocked. Divide down counter 61 then counts up to 2 seconds and it raises its 2 second output signal on line 81 which clocks in a low signal to flip-flop 65. This low signal disables power.

During a powering-off sequence, a system suspend NMI signal on line 75 is generated to signal any software running on the system that a power down sequence is now underway. This signaling process is accomplished using pulse generator 64. When the signal on line 70 transits from a low to a high state, pulse generator 64 generates a pulse which sets flip-flop 69 thereby causing line 75 to go to a high state thereby signaling the software to begin the suspend sequence.

## Claims

1. An information processing system comprising a central processor, a memory for instructions and data, and a plurality of input / output devices, said system being characterised by testing means responsive to initiation of a powering - off sequence in said system to access system profile data stored in said memory to determine whether a resume mode is set, activating means coupled to said testing means for activating a save area of said memory to save the state of all memory locations, the state of all input output devices and interrupt, register and display data in response to said resume mode being set and flag means operable in response to completion of storage of said states and data to set a suspend flag suspending further execution of an application program running on said system.

2. A system as claimed in claim 1 further characterised by means for disabling all interrupts and halting operation of each of said input/output devices on initiation of said powering off sequence and prior to access by said testing means to said profile data.

3. A system as claimed in claim 1 or claim 2 in which said memory is arranged to provide a main memory area accessible to applications running on said system and said save area in the form of a section of said memory not accessible to such applications.

4. A system as claimed in claim 3 further including means for performing first checksum operations on both said save area and said main memory area and for loading the results of such operations into said save area.

5. A system as claimed in claim 4, further including means responsive to subsequent initiation of a power - up sequence in said system to perform a second checksum operation on said save area, means for comparing the results of said first and second checksum operations, and restoring means responsive to successful comparison to restore the saved states and data from said save area to said main memory area.

6. A system as claimed in claim 5, further including means for disabling access to said save area on restoration of said states to said main memory area.

7. A system as claimed in claim 5 or claim 6, further including means for transmitting a resume call to an operating system program which controls said information processing system and for updating the present time and date from a real time clock on completion of restoration.

8. A method of controlling an information processing system having a central processor, a memory and a plurality of input/output devices, the method being characterised by accessing system profile data in response to the initiation of a powering - off sequence to determine whether a resume mode is set, saving, in response to said resume mode being set, the state of all memory locations and said input/output devices and interrupt, register and display data in said memory, and setting a system flag in response to completion of said saving step to suspend further execution of an application program on said system.

9. A method as claimed in claim 8 further comprising the steps of disabling all interrupts in said system and halting operation of said input/output devices in response to such initiation and before accessing said profile data, and, following said saving step, performing a first checksum operation on said memory.

10. A method as claimed in claim 9 in which said saving step comprises activating a save area of said memory to store said states and data.

11. A method as claimed in claim 10, further including the step of performing a first checksum operation on said save area in addition to the first checksum operation on said memory, and storing the results of such operations in said save area.

12. A method as claimed in claim 11 further including the steps of performing a second checksum operation on said save area on subsequent initiation of a power - up sequence, comparing the results of the first and second checksum operations, restoring said states and data to said memory from said save area on successful comparison, and resuming execution of said application program at the point at which it was suspended.

## Revendications

1. Système de traitement d'informations comprenant un processeur central, une mémoire pour les instructions et données et une pluralité de dispositifs d'entrée/sortie, ledit système étant caractérisé par un moyen de test sensible au lancement d'une séquence de mise hors tension dans ledit système pour accéder aux données de profil du système mémorisées dans ladite mémoire afin de déterminer si un mode de reprise est établi, un moyen d'activation couplé audit moyen de test pour activer une zone de sauvegarde de ladite mémoire pour sauvegarder l'état de la totalité des emplacements mémoires, l'état de la totalité des dispositifs d'entrée/sortie et des données d'interruption, des registre et données d'écran de visualisation en réponse audit mode de reprise étant établi, et un moyen d'indicateur que l'on peut mettre en oeuvre en réponse à l'achèvement de la mémorisation desdits états et données pour établir un indicateur de suspension suspendant l'exécution ultérieure d'un programme d'application s'exécutant sur ledit système.

2. Système selon la revendication 1, caractérisé de plus par un moyen pour désactiver la totalité des interruptions et arrêter le fonctionnement de chacun desdits dispositifs d'entrée/sortie sur lancement de ladite séquence de mise hors tension et avant d'accéder par ledit moyen de test auxdites données de profil.

3. Système selon la revendication 1 ou la revendication 2, dans lequel ladite mémoire est disposée pour procurer une zone de mémoire principale accessible aux applications s'exécutant sur ledit système et ladite zone de sauvegarde sous la forme d'une section de ladite mémoire non accessible à ces applications.

4. Système selon la revendication 3, comportant de plus un moyen pour effectuer des premières opérations de total de contrôle sur à la fois ladite zone de sauvegarde et ladite zone de mémoire principale et pour charger les résultats de ces opérations dans ladite zone de sauvegarde.

5. Système selon la revendication 4, comportant de plus un moyen sensible au lancement ultérieur de séquence de mise sous tension dans ledit système pour effectuer une seconde opération de total de contrôle sur ladite zone de sauvegarde, un moyen pour comparer le résultat desdites première et seconde opérations de total de contrôle et un moyen de restauration sensible à la comparaison satisfaisante pour restaurer les états et données sauvegardés à partir de la zone de sauvegarde dans ladite zone de mémoire principale.

6. Système selon la revendication 5, comportant de plus un moyen pour désactiver l'accès à la zone de sauvegarde sur restauration desdits états dans ladite zone de mémoire principale.

7. Système selon la revendication 5 ou la revendication 6, comportant de plus un moyen pour transmettre un appel de reprise à un programme du système d'exploitation qui commande ledit système de traitement d'informations et pour mettre à jour l'heure et la date actuelles à partir d'une horloge temps réel sur achèvement de la restauration.

8. Procédé pour commander un système de traitement d'informations comportant un processeur central, une mémoire et une pluralité de dispositifs d'entrée/sortie, le procédé étant caractérisé par les étapes consistant à : accéder à des données de profil du système en réponse au lancement d'une séquence de mise hors tension pour déterminer si un mode de reprise est établi, sauvegarder en réponse audit mode de reprise étant établi l'état de tous les emplacements mémoires et desdits dispositifs d'entrée/sortie et des données d'interruption, des registre et données de visualisation dans ladite mémoire et positionner un indicateur du système en réponse à l'achèvement de ladite étape de sauvegarde pour suspendre une exécution ultérieure d'un programme d'application sur ledit système.

9. Procédé selon la revendication 8, comprenant de plus les étapes consistant à : désactiver toutes les interruptions dans ledit système et à arrêter le fonctionnement desdits dispositifs d'entrée/sortie en réponse à un tel lancement et avant d'accéder auxdites données de profil et suivant ladite étape de sauvegarde, effectuer une première opération de total de contrôle sur ladite mémoire.

10. Procédé selon la revendication 9, dans lequel ladite étape de sauvegarde comprend l'activation d'une zone de sauvegarde de ladite mémoire pour mémoriser lesdits états et données.

11. Procédé selon la revendication 10, comportant de plus l'étape consistant à effectuer une première opération de total de contrôle sur ladite zone de sauvegarde en plus de la première opération de total de contrôle sur ladite mémoire et mémoriser les résultats de ces opérations dans ladite zone de sauvegarde.

12. Procédé selon la revendication 11, comportant de plus les étapes consistant à effectuer une seconde opération de total de contrôle sur ladite zone de sauvegarde sur lancement ultérieur d'une séquence de mise sous tension, comparer le résultat des première et seconde opérations de total de contrôle, restaurer lesdits états et données dans ladite mémoire à partir de la zone de sauvegarde sur comparaison satisfaisante et reprendre l'exécution dudit programme d'application au point où il a été suspendu.

**Patentansprüche**

1. System zum Verarbeiten von Informationen, mit einem Zentralprozessor, einem Speicher für Befehle und Daten und einer Mehrzahl von Eingabe/Ausgabe-Einrichtungen, wobei das System durch folgendes gekennzeichnet ist: Prüfmittel, die auf eine Initialisierung einer Stromabschalt-Folge in dem System ansprechen, um auf in dem Speicher gespeicherte Systemprofildaten zuzugreifen, um zu bestimmen, ob ein Wiederaufnahmemodus gesetzt ist, Aktivierungsmittel, die mit den Prüfmitteln verbunden sind, um einen Sicherungsbereich des Speichers zu aktivieren, um den Zustand aller Speicherstellen, den Zustand aller Eingabe/Ausgabe-Einrichtungen und Unterbrechungs-, Register-, und Anzeigedaten dementsprechend, daß der Wiederaufnahmemodus gesetzt ist, zu sichern und Markierungsmittel, die entsprechend einem Abschluß des Speicherns der Zustände und Daten betrieben werden können, um eine Aussetzmarkierung zu setzen, die ein weiteres Ausführen eines Anwendungsprogramms aussetzt, das auf dem System läuft.

2. System nach Anspruch 1, das ferner durch folgendes gekennzeichnet ist: Mittel zum Deaktivieren aller Unterbrechungen und eines Haltvorgangs jeder der Eingabe/Ausgabe-Einrichtungen nach einer Initialisierung der Stromabschalt-Folge und vor einem Zugriff von den Prüfmitteln auf die Profildaten.

3. System nach Anspruch 1 oder Anspruch 2, bei welchem der Speicher organisiert ist, um einen Hauptspeicherbereich, auf den von auf dem System laufenden Anwendungen zugegriffen werden kann und den Sicherungsbereich in Form eines Teils des Speichers bereitzustellen, auf den von solchen Anwendungen nicht zugegriffen werden kann.

4. System nach Anspruch 3, das ferner Mittel aufeist, um sowohl in dem Sicherungsbereich als auch in dem Hauptspeicherbereich erste Kontrollsummenarbeitsgänge durchzuführen und um die Ergebnisse socher Arbeitsgänge in den Sicherungsbereich zu laden.

5. System nach Anspruch 4, das ferner folgendes aufweist: Mittel, die auf eine nachfolgende Initialisierung einer Stromeinschalt-Folge in dem System ansprechen, um in dem Sicherungsbereich einen zweiten Kontrollsummenarbeitsgang durchzuführen, Mittel zum Vergleichen der Ergebnisse des ersten und zweiten Kontrollsummenarbeitsganges und Mittel zum Zurückspeichern, die auf einen gelungenen Vergleich ansprechen, um die gesicherten Zustände und Daten aus dem Sicherungsbereich in den Hauptspeicherbereich zurückzuspeichern.

6. System nach Anspruch 5, das ferner Mittel aufweist, um nach einer Zurückspeicherung der Zustände in den Hauptspeicherbereich einen Zugriff auf den Sicherungsbereich zu deaktivieren.

7. System nach Anspruch 5 oder Anspruch 6, das ferner Mittel aufweist, um einen Wiederaufnahmeaufruf an das Betriebssystemprogramm zu übertragen, welches das System zum Verarbeiten von Informationen steuert und um nach dem Abschließen einer Zurückspeicherung aus einem Uhrzeitgeber die laufende Zeit bzw. das laufende Datum zu aktualisieren.

8. Verfahren zum Steuern eines Systems zum Verarbeiten von Informationen, mit einem Zentralprozessor, einem Speicher und einer Mehrzahl von Eingabe/Ausgabe-Einrichtungen, wobei das Verfahren durch folgendes gekennzeichnet ist: Zugreifen auf Systemprofildaten entsprechend der Initialisierung einer Stromabschalt-Folge, um zu bestimmen, ob ein Wiederaufnahmemodus gesetzt ist, Sichern des Zustands aller Speicherstellen und der Eingabe/Ausgabe-Einrichtungen und von Unterbrechungs-, Register-, und Anzeigedaten in dem Speicher dementsprechend, daß der Wiederaufnahmemodus gesetzt ist und Setzen einer Systemmarkierung entsprechend einem Abschluß des Schrittes des Sicherns, um ein weiteres Ausführen eines Anwendungsprogramms auf dem System auszusetzen.

9. Verfahren nach Anspruch 8, das ferner folgendes umfaßt: die Schritte des Deaktivierens aller Unterbrechungen in dem System und eines Haltevorgangs der Eingabe/Ausgabe-Einrichtungen entpsrechend einer solchen Initialisierung und vor dem Zugreifen auf die Profildaten und nach dem Schritt des Sicherns jene des Durchführens eines ersten Kontrollsummenarbeitsgangs in dem Speicher.

10. Verfahren nach Anspruch 9, bei welchem der Schritt des Sicherns das Aktivieren eines Sicherungsbereichs des Speichers umfaßt, um die Zustände und Daten zu speichern.

11. Verfahren nach Anspruch 10, das ferner folgendes umfaßt: den Schritt des Durchführens eines ersten Kontrollsummenarbeitsganges in dem Sicherungsbereich zusätzlich zu dem ersten Kontrollsummenarbeitsgang in dem Speicher und des Speicherns der Ergebnisse solcher Arbeitsgänge in dem Sicherungsbereich.

12. Verfahren nach Anspruch 11, das ferner folgendes umfaßt: die Schritte des Durchführens eines zweiten Kontrollsummenarbeitsganges in dem Sicherungsbereich nach einer nachfolgenden Initialisierung einer Stromeinschalt-Folge, des Vergleichens der Ergebnisse des ersten und zweiten Kontrollsummenarbeitsganges, des Zurückspeicherns der Zustände und Daten nach einem gelungenen Vergleich aus dem Sicherungsbereich in den Speicher und des Wiederaufnehmens des Ausführens des Anwendungsprogramms an der Stelle, bei welcher dieses ausgesetzt wurde.

FIG. 1

**FIG. 2**

SAVE ALL PROCESSOR REGISTERS ON STACK — 84

DISABLE ALL INTERRUPTS
CLEAR SYSTEM SUSPEND FLAG — 85

TURN OFF DISPLAY VIDEO
TURN OFF DISKETTE DRIVES
STOP PRINTERS
DISABLE AUDIO OUTPUT — 86

READ SYSTEM PROFILE AREA — 87

88 — RE-SUME MODE SET? — NO

89

YES

YES — FORCE RESUME? — NO

91 — ACTIVATE SUSPEND SAVE AREA

90 — HALT

SAVE REAL TIME CLOCK INTERRUPT MODE
DISABLE ALL RTC INTERRUPTS EXCEPT ALARM
INTERRUPT — 92

93 — POWER ON BY ALARM REQUESTED? — YES

NO

94 — ENABLE POWER-ON BY ALARM HDWR

FIG. 3A

95 — A

FIG. 3B

FIG. 3C

14

```
┌─────────────────────────────────────┐
│ POWER ON BY SWITCH OR                │──── 113
│ RTC ALARM                            │
└─────────────────────────────────────┘
                  │
                  ▼
┌─────────────────────────────────────┐
│ READ HDWR RESET FLAG                 │──── 114
└─────────────────────────────────────┘
                  │
                  ▼
        115 ┐   ╱◇╲
            └─ ╱OPER-╲        YES      ┌─────────────────────────────────┐
              ╱ATOR OR ╲─────────────► │ RESET SYSTEM-SUSPEND FLAG       │──── 116
              ╲BATTERY LOSS╱           └─────────────────────────────────┘
               ╲ ABORT ╱                            │
                ╲  ? ╱                              │
                 ╲╱                                 │
                  │ NO                              │
                  │◄────────────────────────────────┘
                  ▼
┌─────────────────────────────────────┐
│ ACCESS SUSPEND SAVE AREA            │──── 117
│ CHECKSUM  SAVE-AREA                 │
└─────────────────────────────────────┘
                  │
                  ▼
    118 ┐      ╱◇╲         NO
        └──── ╱CHECKSUM╲ ────────────► ┌─────────────────────────────────┐
              ╲  OK   ╱                │ RESET SYSTEM-SUSPEND FLAG       │──── 119
               ╲  ? ╱                  │ SET SUSPEND ERROR CODE          │
                ╲╱                     └─────────────────────────────────┘
                  │ YES                            │
                  │◄────────────────────────────────┘
                  ▼
┌─────────────────────────────────────┐
│ CHECKSUM  MAIN MEMORY               │──── 121
└─────────────────────────────────────┘
                  │
                  ▼
    122 ┐      ╱◇╲         NO
        └──── ╱CHECKSUM╲ ────────────► ┌─────────────────────────────────┐
              ╲  OK   ╱                │ RESET SYSTEM-SUSPEND FLAG       │──── 123
               ╲  ? ╱                  │ SET SUSPEND ERROR CODE          │
                ╲╱                     └─────────────────────────────────┘
                  │ YES                            │
                  │◄────────────────────────────────┘
                  ▼
                 ╱ C ╲ ──── 124
```

# FIG. 4A

C — 124

SUS-
PEND FLAG
SET
? — 125

NO ← → YES

RUN COMPLETE POWER ON
TEST (POST) INCLUDING
TESTING AND CLEARING
OF ALL MEMORY — 126

RUN POST WITHOUT MODIFY-
ING MAIN MEMORY EXCEPT
VECTORS AND POST DATA
AREA. NO MODIFICATION
OF DISPLAY BUFFER IS MADE
127

FATAL
ERRORS
FOUND
? — 133

YES ←

DISPLAY ANY ERRORS — 128

NO ↓

DISABLE ALL INTERRUPTS
ACCESS SUSPEND SAVE AREA
134

FATAL
ERRORS
FOUND
? — 129

YES

HALT

RESTORE DISPLAY CONTROLLER
MODE & PARAMETERS REGIS-
TERS (LEAVING VIDEO DIS-
ABLED)
135

IPL SYSTEM FROM DISKETTE — 131

RESTORE SYSTEM TIMER 0
MODE COUNT AND RATE
136

PASS CONTROL TO LOADED
PROGRAM — 132

RESTORE SYSTEM TIMER 2
MODE COUNT AND RATE
137

D — 138

FIG. 4B

D ~ 138

RESTORE INTERRUPT CONTROLLER STATE
LEAVING INTERRUPTS DISABLED ~ 139

RESTORE INTERRUPT VECTORS USED BY
POST ~ 141

RESTORE MAIN MEMORY AREA USED BY
POST ~ 142

CLEAR KEYBOARD STATE FLAGS (KEY DE-
PRESSED FLAGS) PURGE ANY PENDING
KEYS ~ 143

UPDATE CONFIGURATION INFORMATION
TO PRESENT CONFIGURATION ~ 144

RESTORE KEYBOARD REGISTERS ~ 145

E ~ 146

# FIG. 4C

```
        ┌─────┐
        │  E  │ ～ 146
        └──┬──┘
           │
           ▼
┌──────────────────────────────────────────┐
│ RESTORE  PRIMARY  COMMUNICATIONS  SETUP   │ ～ 147
└──────────────────────┬───────────────────┘
                       │
                       ▼
┌──────────────────────────────────────────┐
│ RESTORE SECONDARY  COMMUNICATIONS  SETUP  │ ～ 148
└──────────────────────┬───────────────────┘
                       │
                       ▼
┌──────────────────────────────────────────┐
│ RESTORE  STACK   SEGMENT  AND  STACK  POINTER │ ～ 149
│ REGISTERS                                 │
└──────────────────────┬───────────────────┘
                       │
                       ▼
┌──────────────────────────────────────────┐
│ DISABLE  ACCESS  TO  SUSPEND  SAVE  AREA  │ ～ 151
└──────────────────────┬───────────────────┘
                       │
                       ▼
                    ╱──────╲        ～ 152
                   ╱ POWERED ╲      YES
                  ╱  ON  BY   ╲─────────────────┐
                  ╲  ALARM    ╱                 │
                   ╲    ?    ╱                  │
                    ╲──┬───╱                    │
                       │ NO                     ▼
                       │              ┌──────────────────────┐  ～ 153
                       │              │ SET POWERED - ON BY ALARM │
                       │              │ FLAG   RESET  RTC  ALARM  │
                       │              │ ENABLE                │
                       │              └──────────┬───────────┘
                       │                         │
                       ▼◄────────────────────────┘
┌──────────────────────────────────────────┐
│ ENABLE PRINTER PORTS                      │ ～ 154
└──────────────────────┬───────────────────┘
                       │
                       ▼
┌──────────────────────────────────────────┐
│ ENABLE SYSTEM SUSPEND  CAPABILITY         │ ～ 155
└──────────────────────┬───────────────────┘
                       │
                       ▼
                   ┌─────┐
                   │  F  │ ～ 156
                   └─────┘
```

# FIG. 4D

F ~ 156

SET DISKETTE – CHANGED FLAG TO FORCE OPERATING SYSTEM TO CHECK FOR CORRECT DISKETTE BEFORE WRITING ~ 157

ISSUE RESUME CALL TO OPERATING SYSTEM TO ALLOW PRINTER RESTORATION AND TIME AND DATE UPDATE FROM REAL TIME CLOCK ~ 158

RESTORE ALL REGISTERS FROM STACK ~ 159

ENABLE DISPLAY VIDEO ~ 161

RETURN FROM SUSPEND INTERRUPT AND RESUME INTERRUPTED PROGRAM ~ 162

FIG. 4E